# EUROPEAN PATENT APPLICATION

(11) **EP 4 679 871 A2**
(43) Date of publication of application: **14.01.2026**
(21) Application number: 24785315.3
(22) Date of filing: 05.04.2024
(51) Int. Cl.: H04W 8/18, H04W 8/22, H04L 41/0894, H04W 88/18

(54) **METHOD AND DEVICE FOR MANAGING USER EQUIPMENT POLICY IN WIRELESS COMMUNICATION SYSTEM**

(30) Priority: 06.04.2023 KR 20230045463
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); PARK, Jungshin, Suwon-si, Gyeonggi-do 16677 (KR); LEE, Jicheol, Suwon-si, Gyeonggi-do 16677 (KR); SUH, Dongeun, Suwon-si, Gyeonggi-do 16677 (KR)
(74) Representative: Nederlandsch Octrooibureau
(86) International application number: PCT/KR2024/004521
(87) International publication number: WO 2024/210618

(57) **Abstract**

The present disclosure relates to a 5G or 6G communication system for supporting higher data transmission rates. According to an embodiment of the present disclosure, a first network entity for performing a user equipment-policy control function (UE-PCF) in a wireless communication system may comprise: a transceiver; and at least one processor for controlling the transceiver, wherein the at least one processor is configured to: receive a policy control creation request message from a second network entity for performing the UE-PCF, and transmit a policy control creation response message to the second network entity. According to a method and a device according to various embodiments of the present disclosure, it is possible to improve the reliability of UE policy management by using a policy control reporting initiator that allows a network entity to provide a notification upon receiving a UE policy enforcement report.

## Description

### [Technical Field]

The disclosure relates to a method and a device for managing a UE policy in a wireless communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mm Wave, supporting numerologies (for example, operating multiple subcarrier spacings) for efficiently utilizing mm Wave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G system specified by the 3GPP is called a "new radio (NR)" system.

The 5G communication system is considered to be implemented in ultrahigh frequency (mmWave) bands, (e.g., 60GHz bands) so as to accomplish higher data rates. To decrease propagation loss of the radio waves and increase the transmission distance, beamforming, massive multiple-input multiple-output (MIMO), full dimensional MIMO (FD-MIMO), array antenna, analog beam forming, large scale antenna techniques have been discussed in 5G communication systems and applied to the NR system.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

### [Detailed Description of the Invention]

### [Technical Problem]

The disclosure provides a method and a device for transmitting information related to a UE policy applied by a UE so as to allow a network to verify the result of applying the UE policy by the UE.

### [Technical Solution]

According to an embodiment of the disclosure, a first network entity performing a user equipment-policy control function (UE-PCF) in a wireless communication system may include a transceiver and at least one processor configured to control the transceiver, and the at least one processor may be configured to receive a policy control create request message from a second network entity performing the UE-policy control function and transmit a policy control create response message to the second network entity.

According to an embodiment of the disclosure, in case that the policy control create request message includes a UE capability related to a policy enforcement report of the UE, the policy control create response message may include a policy control report trigger (PCRT) based on the UE capability, and in case that the second network entity receives the policy enforcement report of the UE, the PCRT may indicate a notification that the policy enforcement report of the UE has been received.

According to an embodiment of the disclosure, the at least one processor may be configured to
receive a policy control update request message from the second network entity. As an embodiment, in case that the policy control create response message includes the PCRT and the second network entity receives the policy enforcement report of the UE, the policy control update request message may include at least one of information notifying that the policy enforcement report of the UE has been received or information indicating an enforcement policy of the UE.

According to an embodiment of the disclosure, the policy enforcement report of the UE may be received by the second network entity through a policy association established between the second network entity and a third network entity performing a session management-policy control function (SM-PCF), and the policy association may be established based on the policy enforcement report of the UE.

According to an embodiment of the disclosure, the policy enforcement report of the UE may be a report on a policy applied to a session establishment request which is transmitted by the UE to a fourth network entity performing an access management function (AMF).

According to an embodiment of the disclosure, the policy association may be established based on an identifier of at least one of the first network entity or the second network entity.

According to an embodiment of the disclosure, the first network entity may include a home public land mobile network (HPLMN), and the second network entity may include a visited public land mobile network (VPLMN).

According to an embodiment of the disclosure, a method of a first network entity performing a user equipment-policy control function (UE-PCF) in a wireless communication system may include receiving a policy control create request message from a second network entity performing the UE-policy control function, and transmitting a policy control create response message to the second network entity, wherein, in case that the policy control create request message includes a UE capability related to a policy enforcement report of the UE, the policy control create response message may include a policy control report trigger (PCRT) based on the UE capability, and in case that the second network entity receives the policy enforcement report of the UE, the PCRT may indicate a notification that the policy enforcement report of the UE has been received.

According to an embodiment of the disclosure, a second network entity performing a user equipment-policy control function (UE-PCF) in a wireless communication system may include a transceiver and at least one processor configured to control the transceiver, and the at least one processor may be configured to transmit a policy control create request message to a first network entity performing the UE-policy control function and receive a policy control create response message from the first network entity, wherein, in case that the policy control create request message includes a UE capability related to a policy enforcement report of the UE, the policy control create response message may include a policy control report trigger (PCRT) based on the UE capability, and in case that the second network entity receives the policy enforcement report of the UE, the PCRT may indicate a notification that the policy enforcement report of the UE has been received.

According to an embodiment of the disclosure, a method of a second network entity performing a user equipment-policy control function (UE-PCF) in a wireless communication system may include transmitting a policy control create request message to a first network performing the UE-policy control function, and receiving a policy control create response message from the first network entity, wherein, in case that the policy control create request message includes a UE capability related to a policy enforcement report of the UE, the policy control create response message may include a policy control report trigger (PCRT) based on the UE capability, and in case that the policy control create response message includes the PCRT and the second network entity receives the policy enforcement report of the UE, the PCRT may indicate a notification that the policy enforcement report of the UE has been received.

### [Advantageous Effects]

According to a method and a device according to various embodiments of the disclosure, it is possible to improve reliability of UE policy management using a policy control report trigger making a notification when a network entity receives a UE policy enforcement report.

In addition, advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a network structure and interfaces of a wireless communication system according to an embodiment of the disclosure.
FIG. 2 is a diagram illustrating a network structure and an interface of a wireless communication system supporting interworking between an EPS and a 5GS according to an embodiment of the disclosure.
FIG. 3 is a diagram illustrating a UE policy transmission procedure between a network and a UE according to an embodiment of the disclosure.
FIG. 4 is a diagram illustrating a UE policy transmission procedure between a network and a UE according to an embodiment of the disclosure.
FIG. 5 is a diagram illustrating a policy control create and update procedure between a visited UE-PCF and a home UE-PCF according to an embodiment of the disclosure.
FIG. 6 is a diagram illustrating a structure of a network entity configured to perform a policy control function (PCF) according to an embodiment of the disclosure.
FIG. 7 is a diagram illustrating a structure of a network entity that performs a session management function + packet data network gateway control (SMF+PGW-C) according to an embodiment of the disclosure.

### [Mode for Carrying out the Invention]

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that, in the following description, only parts required to understand operations according to various embodiments will be described and a description of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

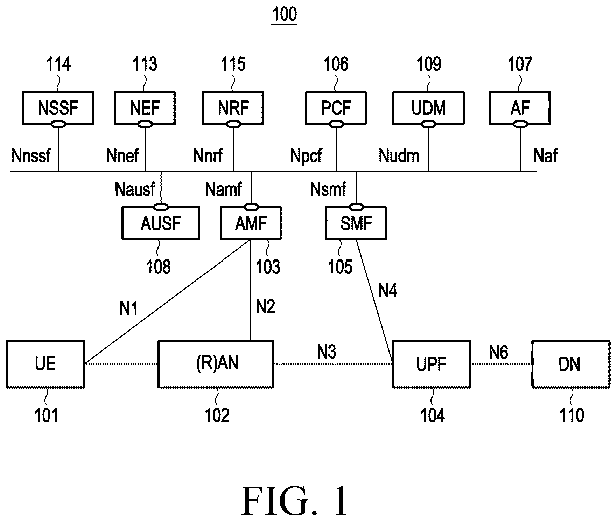

As used herein, network technology may refer to the standard specifications (e.g., TS 23.501, TS 23.502, TS 23.503, etc.) defined by the international telecommunication union (ITU) or 3GPP, and each element included in a network structure of FIG. 1 may refer to a physical entity, or refer to software for performing individual functions or hardware combined with the software. In the drawings, reference numerals represented by "Nx", such as N1, N2, N3, ..., indicate known interfaces between network functions (NFs) in a 5G core network (CN).

FIG. 1 illustrates a network structure and interfaces of a 5G system according to an embodiment of the disclosure.

Network entities included in the network structure of the 5G system in FIG. 1 may include network functions (NFs), depending on system implementations.

Referring to FIG. 1, the network structure of the 5G system 100 may include various network entities. For example, the 5G system may include an authentication server function (AUSF) 108, an access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, and a network repository function (NRF) 115, Also, the 5G system 100 may include an edge application service domain repository (EDR), an edge application server (EAS), an EAS discovery function (EASDF), a user plane function (UPF) 104, a (radio) access network (R)AN) 102, and a user equipment (UE) 101.

The respective NFs of the 5G system 100 support the following functions.

The AUSF 108 processes and stores data for authentication of the UE 101.

The AMF 103 may provide a function for access and mobility management on a per-UE basis, and basically, one UE may be connected to one AMF. Specifically, the AMF 103 may support functions such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for an AMF event and an interface to an LI system), delivery of session management (SM) messages between the UE and the SMF, a transparent proxy for session management (SM) message routing, access authentication, access authorization including roaming permission checking, delivery of SMS messages between the UE and a short message service function (SMSF), a security anchor function (SAF), and/or security context management (SCM). Some or all of the functions of the AMF 103 may be supported within a single instance of one AMF.

The DN 110 refers to, for example, an operator service, Internet access, a third-party service, or the like. The DN 110 transmits a downlink protocol data unit (PDU) to the UPF 104, or receives, from the UPF 104, a PDU transmitted by the UE 101.

The PCF 106 provides a function of receiving information on a packet flow from an application server to determine policies, such as mobility management and session management. Specifically, the PCF 106 supports functions, such as support of a unified policy framework for controlling a network operation, provision of a policy rule so that the control plane function(s) (e.g., AMF, SMF, etc.) may execute the policy rule, and front end implementation for accessing related subscription information in order to determine a policy within a user data repository (UDR).

The SMF 105 provides a session management function, and if the UE 101 has multiple sessions, each session may be managed by a different SMF. Specifically, the SMF 105 may support functions such as session management (e.g., establishment, modification, and release of a session, including maintenance of a tunnel between the UPF 104 and the (R)AN 102 node), UE Internet protocol (IP) address assignment and management (optionally including authentication), UP function selection and control, configuration of traffic steering to route traffic from the UPF 104 to an appropriate destination, and termination of interfaces toward policy control functions, enforcement of policy and quality of service (QoS) control parts, lawful intercept (LI) (for an SM event and an interface to an LI system), termination of NAS message SM parts, downlink data notification, delivery of access network (AN)-specific SM information to (R)AN 102 through N2 via an initiator (AMF 103), determination of a session and service continuity (SSC) mode, and a roaming function. Some or all of the functions of the SMF 105 may be supported within a single instance of one SMF.

The UDM 109 stores the user's subscription data, policy data, and the like. The UDM 109 may include two parts, that is, an application front end (FE) and a user data repository (UDR).

The FE may include a UDM FE responsible for location management, subscription management, credential processing, etc., and a PCF responsible for policy control. The UDR stores data required for functions provided by the UDM-FE and a policy profile required by the PCF. Data stored in the UDR includes policy data and user subscription data including a subscription identifier, security credential, access and mobility-related subscription data, and session-related subscription data. The UDM-FE supports functions, such as access to subscription information stored in the UDR, authentication credential processing, user identification handling, access authentication, registration/mobility management, subscription management, and SMS management.

The UPF 104 transfers a downlink PDU, received from the DN 110, to the UE 101 via the (R)AN 102 and transfers an uplink PDU, received from the UE 101, to the DN 110 via the (R)AN 102. Specifically, the UPF 104 may support functions such as an anchor point for intra-/inter-RAT mobility, an external PDU session point for interconnection to a data network, packet routing and forwarding, a user plane part of packet inspection and policy rule enforcement, lawful intercept, and traffic usage reporting, uplink classifier for supporting the routing of traffic flows to the data network, branching points for supporting multi-homed PDU sessions, QoS handling for a user plane (e.g., packet filtering, gating, uplink/downlink rate enforcement), uplink traffic verification (SDF mapping between service data flow (SDF) and QoS flow), transport-level packet marking within uplink and downlink, downlink packet buffering, and downlink data notification triggering. Some or all of the functions of the UPF 104 may be supported within a single instance of one UPF.

The AF 107 interworks with a 3GPP core network in order to provide services (e.g., supporting functions, such as an application influence on traffic routing, access to network capability exposure, and interworking with a policy framework for policy control).

The (R)AN 102 collectively refers to a new radio access network capable of supporting both evolved E-UTRA which is an evolved version of 4th generation (4G) radio access technology and new radio (NR) technology (e.g., gNB).

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. A user equipment may be referred to as such a term as "terminal", "mobile equipment (ME)", or "mobile station (MS)". In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 provides means, provided by 3GPP network functions, for securely exposing services and capabilities for, for example, third parties, internal exposure/re-exposure, application functions, and edge computing. The NEF 111 receives information (based on the exposed capability (capabilities) of (an)other NF(s)) from the other NF(s). The NEF 111 stores the received information as structured data by using a standardized interface to a data storage network function. The stored information may be re-exposed by the NEF 111 to other NF(s) and AF(s) and used for other purposes such as analysis.

The NRF 115 supports a service discovery function. The NRF 115 receives an NF discovery request from an NF instance, and provides information on a discovered NF instance to the NF instance. In addition, the NEF 115 maintains available NF instances and services supported by the available NF instances.

For the sake of descriptive convenience, FIG. 1 illustrates a reference model for a case where the UE 101 accesses one DN 110 by using one PDU session, but the disclosure is not limited thereto.

The UE 101 may concurrently access, for example, two (i.e., local and central) data networks by using multiple PDU sessions. In this case, two SMFs may be selected for different PDU sessions. However, each SMF may have the capability to control both a local UPF and a central UPF within a PDU session.

In addition, the UE 101 may concurrently access, for example, two (i.e., local and central) data networks provided within a single PDU session.

The NSSF 114 may select a set of network slice instances serving the UE 101. In addition, the NSSF 114 may determine granted network slice selection assistance information (NSSAI) and, if necessary, perform mapping to a subscribed single-network slice selection assistance information (S-NSSAI). Furthermore, the NSSF 114 may determine a configured NSSAI and, if necessary, perform mapping to the subscribed S-NSSAIs. Moreover, the NSSF 114 may determine a set of AMFs used to serve the UE or, depending on the configuration, query the NRF 115 to determine a list of candidate AMFs.

The NRF 115 supports a service discovery function. The NRF 115 receives an NF discovery request from an NF instance, and provides information on a discovered NF instance to the NF instance. In addition, the NRF 115 maintains available NF instances and services supported by the available NF instances.

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a DN
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the following descriptions, a UE may refer to the UE 101, and the term "UE" or "terminal" may be used interchangeably. In this case, unless specially defined additionally, a UE may be understood as the UE 101.

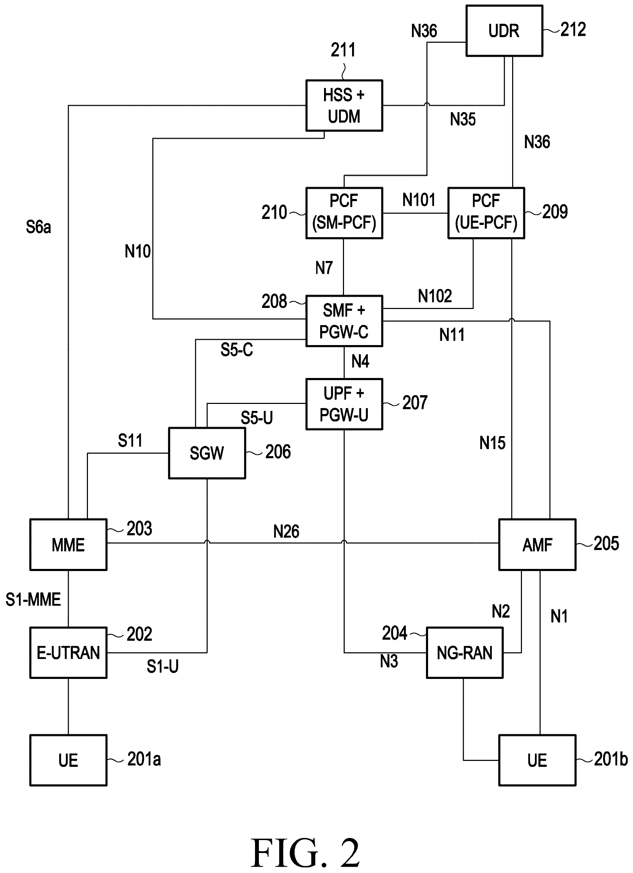

FIG. 2 is a diagram illustrating a network structure of a wireless communication system supporting interworking between an EPS and a 5GS and an example of an interface according to an embodiment of the disclosure.

Basic functions of corresponding entities in FIG. 1 among network entities in FIG. 2 may refer to the description of FIG. 1.

The 5GS may include a new radio (NR) base station (NG-radio access node (RAN) or next generation node B (gNB)) 204 and an access and mobility management function (AMF) 205, and further include the session management function (SMF), the user plane function (UPF), the policy control function (PCF), the network slice selection function (NSSF), the unified data management (UDM), and the unified data repository (UDR) which are not illustrated in FIG. 2 but described in FIG. 1.

The EPS may include an E-UTRA base station (evolved universal mobile telecommunications system (UMTS) terrestrial radio access network (E-UTRAN) or evolved node B (eNB)) 202 for radio access of a UE 201a, a mobility management entity (MME) 203 for managing mobility of the UE 201a, a serving gateway (SGW) 206 in charge of a user plane of the UE 201a, a packet data network gateway (PGW) (the PGW including a PGW-user (U) and a PGW- control (C)), a policy and charging rule function (PCRF) for managing policy information, and a home subscriber server (HSS) for managing subscription information of the UE 201a.

According to an embodiment, the AMF 205 and the MME 203 may be network functions (NFs) managing radio network access and mobility for the UE. The SMF, the SGW, and the PGW are NFs for managing a session of the UE, and session information may include quality of service (QoS) information, charging information, and information on packet processing. Further, the UPF and the PGW are NFs for processing user plane traffic (for example, user plane traffic) and may be controlled by the SMF and the SGW. The PCF and the PCRF may be NFs for managing a service provider policy (an operator policy and/or a public land mobile network (PLMN) policy) for providing a communication service in a wireless communication system.

In addition, the PCF may be divided into a PCF (that is, UE-PCF) serving to handle an access and mobility (AM) policy and a UE policy and a PCF (that is, SM-PCF) serving to handle a session management (SM) policy. The PCF (that is, AM-PCF/UE-PCF) serving to handle the AM/UE policy and the PCF (that is, SM-PCF) serving to handle the SM policy may be logically or physically separated NFs or logically or physically one NF. The UDM and the HSS may be NFs for storing and managing UE subscription information (UE subscription). The UDR 212 may be an NF or a database (DB) for storing and managing data. The UDR 212 may store UE subscription information and provide the UE subscription information to the UDM. Further, the UDR 212 may store operator policy information and provide the operator policy information to the PCF. The NSSF may be an NF for performing a function of selecting network slice instances servicing the UE or determining NSSAI.

The instance may mean a state in which the NF exists in the form of a software code and an NF function can be executed through allocation of physical or/and logical resources by a computing system to perform the NF function in a physical computing system (for example, a specific computing system existing in a core network). For example, an AMF instance, an SMF instance, an NSSF instance, or the like may mean a state in which physical or/and logical resources can be allocated and used for the operation of the AMF, the SMF, the NSSF, or the like by a specific computing system existing in a core network. Accordingly, the case in which the AMF, the SMF, and the NSSF device exist and the AMF instance, the SMF instance, and the NSSF instance in which physical or/and logical resources are allocated and used for the AMF, SMF, and NSSF operation by a specific computing system existing in the network may perform the same operation.

The UDM of the 5GS and the HSS of the EPS may be constituted by one combo node (or referred to as a combination node)(referred to as UDM + HSS) (or referred to as HSS + UDM) 211. The UDM + HSS node 211 may store UE subscriber information. The SMF of the 5GS and the PGW-C of the EPS may be constituted by one combo node (referred to as SMF + PGW-C) (or referred to as PGW - C + SMF) 208. The PCF of the 5GS and a policy control and charging rules function (PCRF) of the EPS may be constituted by one combo node (referred to as PCF + PCRF) (or referred to as PCRF + PCF). The UPF of the 5GS and the PGW-U of the EPS may be constituted by one combo node (referred to as UP + PGW - U) (or referred to as PGW - U + UPF) 207. The UE 201a may access the MME 203 of the EPS through the E-UTRA 202 and use the EPS network service. The UE 201b may access the AMF 205 of the 5GS through the NR-RAN 204 to use a 5GS network service. In FIG. 2, for convenience of description, different reference numerals are used for the UE accessing the EPS and the UE accessing the 5GS, but the UEs 201a and 201b may be the same UEs. This is to indicate that the UE is a UE that may access the EPS and access the 5GS.

In the disclosure, the EPS and the 5GS may be referred to as a first network and a second network, respectively, or referred to as a second network and a first network, respectively.

As described above, one NF or network entity may simultaneously support different network systems, and the NF, the network node, or the network entity may be called the combo node, the combo NF, the combined node, the integrated NF, the interworking node, the interworking NF, or the like. The function of the NF described as the combo node may be implemented through interworking between two or more network entities. In addition, the NF simultaneously supporting different network systems may be expressed using the sign "+" or "/" for convenience of illustration and description. For example, when the SMF and the PGW-C are configured as one combo node, the expression of PGW-C/SMF, PGW-C+SMF, SMF/PGW-C, or SMF+PGW-C may be used.

The UE 201a or 201b may access a data network (for example, an IP network providing an Internet service) through the 5GS or the EPS to establish a session. At this time, the UE may distinguish each data network by using an identifier such as a data network name (DNN) or an access point name (APN). In order to distinguish between data networks, the DNN may be used in the 5GS and the APN may be used in the EPS. When the UE establishes a session with a network system, the DNN and the APN may be used to determine an NF related to a user plane, an interface between NFs, an operator policy, and the like. The DNN and the APN may be understood as equivalent information and may transmit the same information. The DNN may be used to select, for example, the SMF and UPF(s) for a PDU session and used to select interface(s) (for example, N6 interface) between the data network and the UPF for a PDU session. Further, the DNN may be used to determine a mobile communication operator policy to be applied to a PDU session.

In the following embodiments, the combo node such as the UDM+HSS node, the PCF+PCRF node, the SMF+PGW-C node, or the UPF+PGW-C node is described without the term "node" for convenience of description. In the following embodiments, the definition of a message defined in one embodiment may be applied as the same meaning to another embodiment using the same message.

The PCF may be divided into a session management-policy control function (SM-PCF) 210 in charge of a session management (SM) policy and a UE policy control function (UE-PCF) 209 in charge of a mobility management (AM) policy and/or a UE policy. The SM-PCF 210 may be connected with the SMF (SMF+PGW-C 208 in FIG. 2) through an N7 interface but cannot be connected with the AMF 205. In other words, the SM-PCF 210 cannot support an N15 interface. The UE-PCF 209 may be connected with the AMF 205 through the N15 interface but cannot be connected with the SMF (SMF+PGW-C 208 in FIG. 2). In other words, the UE-PCF 209 cannot support the N7 interface. The SM-PCF 210 and the UE-PCF 209 may be physically and/or logically located at one device or one PCF but may be separated as different PCF instances.

The UE policy which the PCF provides to the UE may include an access network discovery & selection policy (ANDSP), a UE route selection policy, a vehicle-to-everything (V2X) policy, and/or a ProSe policy.

Access network discovery & selection policy (ANDSP): includes policy information required when the UE selects a non-3GPP access network.

UE route selection policy (URSP): includes policy information required for routing traffic leaving the UE.

V2X policy (V2XP): includes policy information which provides configuration parameters required for V2X communication of the UE.

ProSe policy (ProSeP): includes policy information which provides configuration parameters required for ProSe direct discovery of the UE, ProSe direct communication, ProSe UE-to-network relay and remote UE communication.

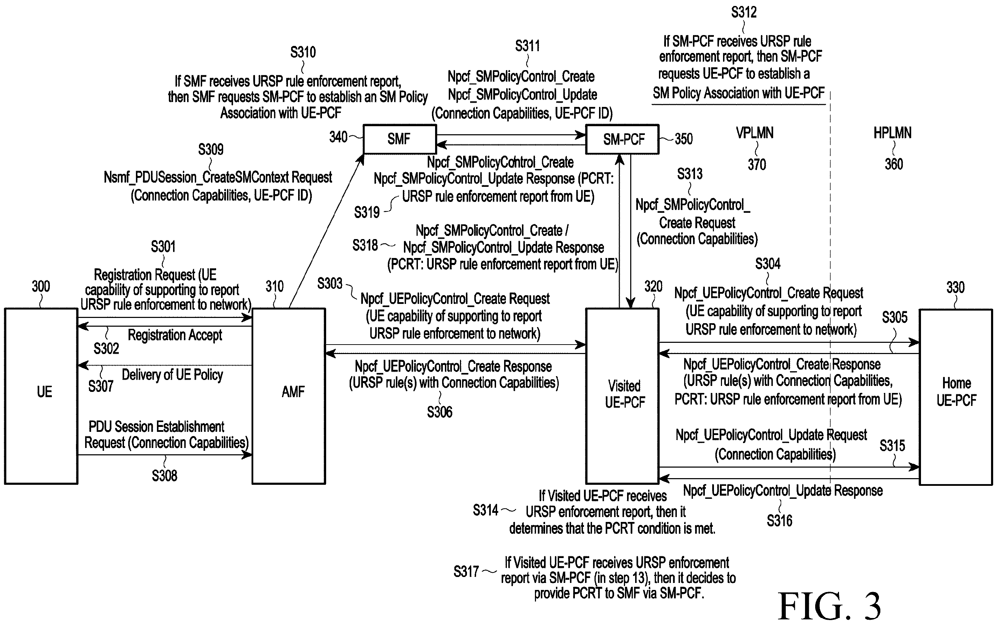

FIG. 3 is a diagram illustrating a UE policy transmission procedure between a network and a UE according to an embodiment of the disclosure.

All of a 5G system (5GS) and LTE and LTE-A systems are wireless communication systems providing packet-based services. The 5GS is being developed to support mutual interworking with an evolved packet system (EPS) based on LTE and LTE-A. In the 5G system, a 5G core (5GC) network may provide UE policy information to the UE.

In the 5G system, the PCF may provide determined UE policy information to the UE through the AMF, and the PCF may store the UE policy information provided to the UE in the UDR. The PCF may perform a function of managing the UE policy information stored in the UDR and provided to the UE such that the UE policy information is maintained as the latest data and maintained to be the same as UE policy information actually stored in the UE. In the 5G system supporting EPC interworking, when the network and the UE support the same, UE policy information may be transferred to the UE through an EPC entity (for example, SMF+PGW-C or MME).

Meanwhile, the UE may receive different UE policies for various services and applications from the network, each of the UE policies may conflict with each other or similar to each other. Accordingly, there is a possibility that the UE policy may be applied through a method contrary to the intention of the network, and the PCF needs a verification method for trusting a UE policy application method of the UE to manage the UE policy. Hereinafter, a method by which the PCF receives a report on the UE policy of the UE and manages the same is described.

Referring to FIG. 3, a UE policy transmission procedure between a network and a UE in a roaming state of the UE is illustrated. Specifically, FIG. 3 illustrates a home PLMN (HPLMN) 360 to which a UE 300 subscribes and a visited PLMN (VPLMN) 370 from which the UE receives a service in a roaming state, and a home UE-PCF 330 is a network entity included in the HPLMN, and an AMF 310, a visited UE-PCF 320, an SMF 340, and an SM-PCF 350 are network entities included in the VPLMN. Even though the UE is in the roaming state, the UE policy is finally reported to the home UE-PCF 330 of the HPLMN. Step 301 (S301): the UE 300 may make a 5GS registration request to the AMF 310 by using a registration request message. This request may include a UE capability indicating whether a URSP rule enforcement report function is supported for the network. In the disclosure, the URSP rule enforcement report may be a policy enforcement report of the UE, and the term URSP rule enforcement report or the term UE policy enforcement report may be interchangeably used.

Step 302 (S302): the AMF 310 may respond, to the UE 300, to accept the 5GS registration request of the UE 300 in step 301 by using a registration accept message.

Step 303 (S303): the AMF 310 may transfer the capability of the UE 300 indicating whether the URSP rule enforcement report function is supported for the network to the visited UE-PCF 320 by using an Npcf_UEPolicyControl_Create request message.

Step 304 (S304): the visited UE-PCF 320 may transfer the capability of the UE 300 indicating whether the URSP rule enforcement report function is supported for the network to the home UE-PCF 330 by using the Npcf_UEPolicyControl_Create request message.

Step 305 (S305): when it is determined that the UE 300 has the capability to support the URSP rule enforcement report function for the network in step 304, the home UE-PCF 330 may determine to provide a policy control report trigger (PCRT) to receive a notification when receiving the URSP rule enforcement report from the UE 300. The home UE-PCF 330 may provide the visited UE-PCF 320 with at least one of the URSP rule or the PCRT to receive the notification when receiving the URSP rule enforcement report from the UE 300 by using an Npcf_UEPolicyControl_Create response message. The URSP rule which the home UE-PCF 330 provides to the visited UE-PCF 320 may include a URSP rule using a connection capability.

Step 306 (S306): the visited UE-PCF 320 may transfer the URSP rule received in step 305 to the AMF 310 by using the Npcf_UEPolicyControl_Create response message. The URSP rule which the visited UE-PCF 320 transfers to the AMF 310 may include a URSP rule using a connection capability.

Step 307 (S307): the AMF 310 may transfer the URSP rule received in step 306 to the UE 300.

Step 308 (S308): the UE 300 may make a PDU session establishment request to the AMF 310 by using a PDU session establishment request message. As described in step 301, when supporting the URSP rule enforcement report function for the network, the UE 300 may provide the AMF 310 with connection capability information indicating the URSP rule applied to the corresponding PDU session establishment request.

Step 309 (S309): the AMF 310 may make a request for establishing a PDU session to the SMF 340 by using an Nsmf_PDUSession_CreateSMContext request message. Through the request, at least one of connection capability information indicating the URSP rule applied to the corresponding PDU session establishment request received from the UE 300 in step 308 or information related to a UE policy association established by the AMF 310 with the UE-PCF 320 to manage a UE policy of the corresponding UE 300 may be provided. The information related to the UE policy association may include an identity of the visited UE-PCF 320 and/or an identity of the home UE-PCF 330.

Step 310 (S310): when receiving the URSP rule enforcement report from the AMF 310 in step 309, the SMF 340 may determine that establishment of an association for managing a policy between the SM-PCF 350 and the UE-PCF 320 is needed to transfer the report to the UE-PCF. When receiving connection capability information indicating the URSP rule applied to the corresponding PDU session establishment request from the AMF 310 in step 309, the SMF 340 may determine that the URSP rule enforcement report has been received. For example, the SMF 340 may make a request for establishing a SM_Policy association (or UE policy association) with the UE-PCF to the SM-PCF 350 and transfer connection capability information indicating the URSP rule applied to the corresponding PDU session establishment request received from the AMF 310.

Step 311 (S311): the SMF 340 may make a request for establishing the SM policy association (UE policy association) to the SM-PCF 350 by using an Npcf_SMPolicyControl_Create request message. This request may include at least one of connection capability information indicating the URSP rule applied to the corresponding PDU session establishment request received from the AMF 310 or information related to the UE policy association established by the AMF 310 with the UE-PCF to manage a UE policy of the corresponding UE 300.

Step 312 (S312): when receiving the URSP rule enforcement report from the SMF 340 in step 311, the SMF-PCF 350 may determine that establishment of the association for managing a policy between the SM-PCF 350 and the UE-PCF is needed to transfer the report to the UE-PCF. When receiving connection capability information indicating the URSP rule applied to the corresponding PDU session establishment request from the SMF 340 in step 311, the SM-PCF 350 may determine that the URSP rule enforcement report has been received. For example, the SM-PCF 350 may make a request for establishing an SM policy association (or UE policy association) to the UE-PCF and transfer connection capability information indicating the URSP rule applied to the corresponding PDU session establishment request received from the SMF 340. When determining a target UE-PCF to which the URSP rule enforcement report received from the SMF 340 is to be transferred, the SM-PCF 350 may use a UE-PCF ID provided by the SMF 340 or make a request for the same to a binding session function (BSF) (or including another NF, for example, the UDR or the NFR), so as to acquire the UE-PCF ID in step 311. At this time, the UE-PCF ID may include an indicator or an address indicating the visited UE-PCF 320 and/or the home UE-PCF 330.

Step 313 (S313): the SM-PCF 350 may make a request for establishing the SM policy association (or UE policy association) to the visited UE-PCF 320 by using the Npcf_SMPolicyControl_Create request message according to the determination in step 312. This request may include connection capability information indicating the URSP rule applied to the corresponding PDU session establishment request received from the SMF 340 in step 311.

Step 314 (S314): when receiving the URSP rule enforcement report from the SM-PCF 350 in step 313, the visited UE-PCF 320 may determine that, when receiving the URSP rule enforcement report from the UE 300 with respect to the PCRT received from the home UE-PCF 330 in step 305, a condition of the PCRT is satisfied to receive a notification thereof. When receiving connection capability information indicating the URSP rule applied to the corresponding PDU session establishment request from the SM-PCF 350 in step 312, the SM-PCF 350 may determine that the URSP rule enforcement report has been received.

Step 315 (S315): the visited UE-PCF 320 may report that the URSP rule enforcement report has been received from the UE 300 to the home UE-PCF 330 by using the Npcf_UEPolicyControl_Update request message. This request may include a connection capability indicating the URSP rule applied to the corresponding PDU session establishment request received from the SM-PCF 350 in step 312.

Step 316 (S316): the home UE-PCF 330 may respond to the visited UE-PCF 320 by using an Npcf_UEPolicyControl_Update response message.

Step 317 (S317): the visited UE-PCF 320 may provide the NF having provided the URSP rule enforcement report in step 313 with the PCRT to receive the notification when receiving the URSP rule enforcement report from the UE 300 as the PCRT received from the home UE-PCF 330 in step 305 and determine to receive the notification even after step 317. For example, when receiving, from the SM-PCF 350, the notification indicating that the URSP rule enforcement report has been received from the UE 300 in step 313, the visited UE-PCF 320 may provide the PCRT to the SM-PCF 350 to receive the notification thereafter.

Step 318 (S318): the visited UE-PCF 320 may provide the SM-PCF 350 with the PCRT to receive the notification when receiving the URSP rule enforcement report from the UE 300 according to the determination in step 317. The visited UE-PCF 320 may provide the SM-PCF 350 with the PCRT to receive the notification by using the Npcf_UEPolicyControl_Create response message when receiving the URSP rule enforcement report from the UE.

Step 319 (S319): when receiving the PCRT to receive the notification when receiving the URSP rule enforcement report from the UE 300 from the visited UE-PCF 320 in step 318 and/or receiving the URSP rule enforcement report from the SMF 340 in step 311, the SM-PCF 350 may provide the SMF 340 with the PCRT to receive the notification when receiving the URSP rule enforcement report from the UE 300 and determination to receive the notification even after step 319. For example, when receiving the PCRT to receive, from the visited UE-PCF 320, the notification when receiving the URSP rule enforcement report from the UE 300 in step 318, the SM-PCF 350 may determine to apply the same to the SMF 340. The SM-PCF 350 may provide the SMF 340 with the PCRT to receive the notification by using the Npcf_UEPolicyControl_Create response message when receiving the URSP rule enforcement report from the UE 300.

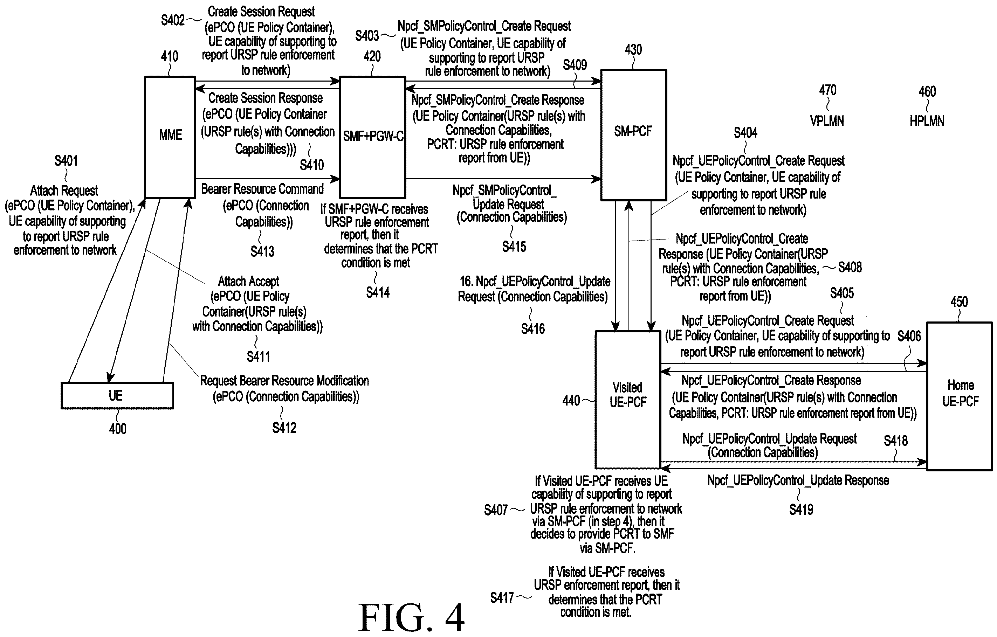

FIG. 4 is a diagram illustrating a UE policy transmission procedure between a network and a UE according to an embodiment of the disclosure. FIG. 4 corresponds to a method of applying the procedure described in FIG. 3 to the case where the UE accesses the network through the MME. Accordingly, the content same as that described in FIG. 3 may be omitted and described.

Referring to FIG. 4, a UE policy transmission procedure between the network and the UE in a roaming state of the UE is illustrated. Specifically, FIG. 4 illustrates a home PLMN (HPLMN) 460 to which a UE 400 subscribes and a visited PLMN (VPLMN) 470 from which the UE receives a service in a roaming state, and a home UE-PCF 450 is a network entity included in the HPLMN, and an MME 410, an SMF+PGW-C 420, and a visited UE-PCF 440 are network entities included in the VPLMN. Even though the UE is in the roaming state, the UE policy is finally reported to the home UE-PCF 430 of the HPLMN.

Step 401 (S401): the UE 400 may make a request for registering an EPS to the MME 410 by using an attach request message. This request may include at least one of a UE policy container or capability of the UE 400 indicating whether a URSP rule enforcement report function is supported for the network. The capabilities of the UE 400 indicating whether to support the URSP rule enforcement report function for the network may be provided in the form included in extended protocol configuration options (ePCO) or protocol configuration options (PCO).

Step 402 (S402): the MME 410 may make a request for establishing a session to the SMF+PGW-C 420 by using a create session request message. This request may include at least one of the UE policy container or the capability of the UE 400 indicating whether a URSP rule enforcement report function is supported for the network. The capabilities of the UE 400 indicating whether the URSP rule enforcement report function is supported for the network may be provided in the form included in the ePCO or the PCO.

Step 403 (S403): the SMF+PGW-C 420 may make a request for establishing an SM policy association to the SM-PCF 430 by using the Npcf_SMPolicyControl_Create request message. This request may include at least one of the policy container of the UE 400 or the capability of the UE 400 indicating whether the URSP rule enforcement report function is supported for the network.

Step 404 (S404): the SM-PCF 430 may make a request for establishing the UE policy association to the visited UE-PCF 440 by using the Npcf_UEPolicyControl_Create request message. This request may include at least one of the UE policy container or the capability of the UE 400 indicating whether a URSP rule enforcement report function is supported for the network.

Step 405 (S405): the visited UE-PCF 440 may make a request for establishing the UE policy association to the home UE-PCF 450 by using an Npcf_UEPolicyControl_Create request message. This request may include at least one of the UE policy container or the capability of the UE 400 indicating whether a URSP rule enforcement report function is supported for the network.

Step 406 (S406): when it is determined that the UE 400 has the capability to support the URSP rule enforcement report function for the network in step 404, the home UE-PCF 450 may determine to provide a policy control report trigger (PCRT) to receive a notification when receiving the URSP rule enforcement report from the UE 400. The home UE-PCF 450 may provide the visited UE-PCF 440 with at least one of the URSP rule or the PCRT to receive the notification when receiving the URSP rule enforcement report from the UE 400 by using an Npcf_UEPolicyControl_Create response message. The URSP rule which the home UE-PCF 450 provides to the visited UE-PCF 440 may include a URSP rule using a connection capability.

Step 407 (S407): when receiving, from the SM-PCF 430, information on the capability to support the URSP rule enforcement report function for the network by the UE 400 in step 404, the visited UE-PCF 440 may determine to receive the notification even after step 407 by providing the PCRT to receive the notification when receiving the URSP rule enforcement report from the UE 400 received from the home UE-PCF 450 in step 406.

Step 408 (S408): the visited UE-PCF 440 may transfer at least one of the URSP rule received in step 406 or the policy control report trigger (PCRT) to receive the notification when receiving the URSP rule enforcement report from the UE 400 to the SM-PCF 430 by using the Npcf_UEPolicyControl_Create response message. The URSP rule which the visited UE-PCF 440 transfers to the SM-PCF 430 may include a URSP rule using a connection capability.

Step 409 (S409): the SM-PCF 430 may transfer at least one of the URSP rule received in step 408 or the policy control report trigger to receive the notification when receiving the URSP rule enforcement report from the UE 400 to the SMF+PGW-C 420 by using the Npcf_SMPolicyControl_Create response message. The URSP rule which the SM-PCF 430 transfers to the SMF+PGW-C 420 may include a URSP rule using a connection capability.

Step 410 (S410): the SMF+PGW-C 420 may transfer the URSP rule received in step 409 to the MME 410 by using a create session response message. The URSP rule which the SMF+PGW-C 420 transfers to the MME 410 may include a URSP rule using a connection capability. The URSP rule may be provided in the form included in the ePCO or the PCO.

Step 411 (S411): the MME 410 may transfer the URSP rule received in step 410 to the UE 400 by using an attach accept message. The URSP rule which the MME 410 transfers to the UE 400 may include a URSP rule using a connection capability. The URSP rule may be provided in the form included in the ePCO or the PCO.

Step 412 (S412): the UE 400 may make a request for modifying bearer resources to the MME 410 by using a request bearer resource modification message. As described in step 401, when supporting the URSP rule enforcement report function for the network, the UE 400 may provide the MME 410 with connection capability information indicating the URSP rule applied to establishment of the corresponding PDN connection (PDN session). The connection capability information indicating the URSP rule applied to establishment of the corresponding PDN connection may be provided in the form included in the ePCO or the PCO.

Step 413 (S413): the MME 410 may transmit a bearer resource command message to the SMF+PGW-C 420. This message may include connection capability information indicating the URSP rule applied to establishment of the corresponding PDN connection described in step 412. The connection capability information indicating the URSP rule applied to establishment of the corresponding PDN connection may be provided in the form included in the ePCO or the PCO.

Step 414 (S414): when receiving the URSP rule enforcement report from the MME 410 in step 413, the SMF+PGW-C 420 may determine that a condition of the policy control report trigger (PCRT) to receive the notification when receiving the URSP rule enforcement report from the UE 400 is satisfied as the policy control report trigger (PCRT) received from the SM-PCF 430 in step 409. When receiving the connection capability information indicating the URSP rule applied to establishment of the corresponding PDN connection from the MME 410 in step 413, the SMF+PGW-C 420 may determine that the URSP rule enforcement report has been received.

Step 415 (S415): the SMF+PGW-C 420 may report that the URSP rule enforcement report has been received from the UE 400 to the home SM-PCF 430 by using the Npcf_SMPolicyControl_Update request message. This report may include the connection capability indicating the URSP rule applied to the corresponding PDN connection establishment request received from the MME 410 in step 413.

Step 416 (S416): the SM-PCF 430 may report that the URSP rule enforcement report has been received from the UE 400 to the visited UE-PCF 440 by using the Npcf_UEPolicyControl_Update request message. This report may include the connection capability indicating the URSP rule applied to the corresponding PDN connection establishment request received from the SMF+PGW-C 420 in step 15.

Step 417 (S417): when receiving the URSP rule enforcement report from the SM-PCF 430 in step 416, the visited UE-PCF 440 may determine that a condition of the policy control report trigger (PCRT) is satisfied to receive the notification when receiving the URSP rule enforcement report from the UE 400 as the policy control report trigger (PCRT) received from the home UE-PCF 450 in step 406. When receiving the connection capability information indicating the URSP rule applied to establishment of the corresponding PDN connection from the SM-PCF 430 in step 16, the visited UE-PCF 440 may determine that the URSP rule enforcement report has been received.

Step 418 (S418): the visited UE-PCF 440 may report that the URSP rule enforcement report has been received from the UE 400 to the home UE-PCF 450 by using the Npcf_UEPolicyControl_Update request message. This report may include the connection capability indicating the URSP rule applied to the corresponding PDN connection establishment request received from the SM-PCF 430 in step 416.

Step 419 (S419): the home UE-PCF 450 may respond to the visited UE-PCF 440 by using an Npcf_UEPolicyControl_Update response message.

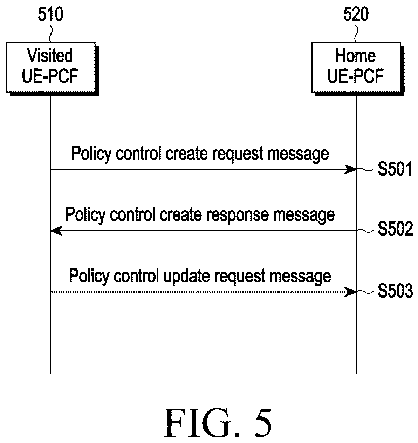

FIG. 5 is a diagram illustrating a policy control create and update procedure between a visited UE-PCF and a home UE-PCF according to an embodiment of the disclosure.

FIG. 5 is a diagram illustrating some procedures between a visited UE-PCF 510 and a home UE-PCF 520 in detail among the procedures illustrated in FIG. 3. In the disclosure, the home UE-PCF 520 may be referred to as a first network entity, and the visited UE-PCF 510 may be referred to as a second network entity.

Step 501 (S501): the visited UE-PCF 510 may transmit a policy control create request message to the home UE-PCF 520. The policy control create request message may include an Npcf_UEPolicyControl_Create request message corresponding to step 304 (S304) of FIG. 3.

Step 502 (S502): the home UE-PCF 520 may transmit a policy control create response message to the visited UE-PCF 510. The policy control create response message may include an Npcf_UEPolicyControl_Create response message corresponding to step 305 (S305) of FIG. 3. When the policy control create request message includes a UE capability related to a policy enforcement report of the UE, the policy control create response message may include a policy control report trigger (PCRT) based on the UE capability. When the second network entity receives the policy enforcement report of the UE, the policy control report trigger (PCRT) may indicate that the policy enforcement report has been received.

Step 503 (S503): the visited UE-PCF 510 may transmit a policy control update request message to the home UE-PCF 520. The policy control update request message may include an Npcf_UEPolicyControl_Update request message corresponding to step 315 (S315) of FIG. 3. When the policy control create response message includes the policy control report trigger (PCRT) and the visited UE-PCF 510 receives the policy enforcement report of the UE, the policy control update request message may notify that the policy enforcement report of the UE has been received.

When the policy control create response message includes the policy control report trigger (PCRT) and the visited UE-PCF 510 receives the policy enforcement report of the UE, the policy control update request message may include information indicating the enforcement policy of the UE.

The policy control update request message may be received through a policy association established between the visited UE-PCF 510 and the SM-PCF, and the policy association may be established based on a policy enforcement report of the UE.

The policy enforcement report of the UE is a report on the policy applied to a session establishment request which the UE transmits to the AMF, and the policy association may be established based on identifiers of at least one of the home UE-PCF 520 or the visited UE-PCF 510.

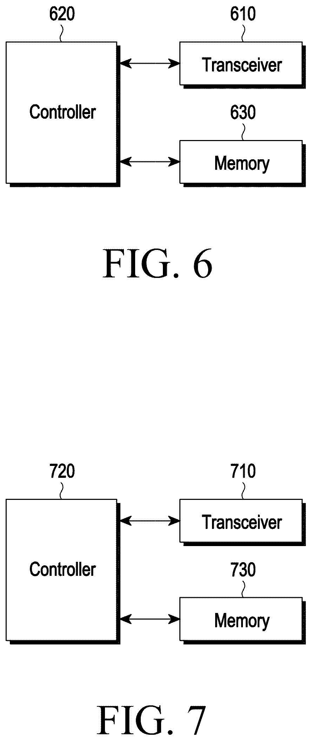

FIG. 6 is a diagram illustrating a structure of a network entity configured to perform a policy control function (PCF) according to an embodiment of the disclosure.

FIG. 6 illustrates a structure of the PCF according to an embodiment of the disclosure. The device may be an entity configured to perform the policy control function. The PCF may be divided into an SM-PCF in charge of a session management (SM) policy and a UE-PCF in charge of a mobility management (AM) policy and/or a UE policy. The SM-PCF and the UE-PCF may be configured as separated devices, and may be configured to be logically separated even though they are configured as the same devices.

As illustrated in FIG. 6, the PCF in the disclosure may include a transceiver 610 including a receiver and a transmitter, at least one controller (processor) 620, and memory 630. The transceiver 610 and the memory 630 may be connected to the at least one controller 620 to be operable according to the control of the at least one controller 620. Of course, the disclosure is not limited to the example, and the network entity may include more or fewer elements than those illustrated in FIG. 6.

The at least one controller 620 may control the overall operation of the PCF to operate an operation according to a combination of one or more of the embodiments in FIGs. 1 to 4. The transceiver 610 may transmit and receive a signal to and from the UE and other network devices. The signal may include a control message, data information, and the like. Meanwhile, the transceiver 610, the at least one controller (processor) 620, and the memory 630 should not be necessarily implemented as separated modules, but may be implemented as one component in the form of a single chip. The controller (processor) 620 may be an application processor (AP), a communication processor (CP), a circuit, an application-specific circuit, or at least one processor. The transceiver 610 may include at least one communication interface configured to wiredly/wirelessly transmit and receive a signal to and from another network entity.

According to an embodiment of the disclosure, the memory 630 may store a basic program for the operation of the corresponding network entity, an application program, and data such as configuration information. The memory 630 provides the stored data according to a request from the controller (processor) 620. The memory 630 may be configured by storage media such as ROM, RAM, hard disc, CD-ROM, and DVD, or a combination of the storage media. The number of memories 630 may be plural. The controller (processor) 620 may perform at least one of the embodiments, based on a program for performing an operation according to at least one of the embodiments of the disclosure stored in the memory 630.

FIG. 7 is a diagram illustrating a structure of a network entity configured to perform a session management function + packet data network gateway control (SMF+PGW-C) according to an embodiment of the disclosure.

The device may be a network entity configured to perform a session management function and a packet data network gateway control function (PGW-C). The SMF+PGW-C may be the concept including the SMF of the 5GS and the PGW-C of the EPS as one combo node.

As illustrated in FIG. 7, the SMF+PGW-C in the disclosure may include a transceiver 710 including a receiver and a transmitter, at least one controller (processor) 720, and memory 730. The transceiver 710 and the memory 730 may be connected to the at least one controller 720 to be operable according to the control of the at least one controller 720. Of course, the disclosure is not limited to the example, and the network entity may include more or fewer elements than those illustrated in FIG. 7.

The at least one controller 720 may control the overall operation of the SMF-PGW-C to perform an operation according to a combination of one or more of the embodiments of FIGs. 1 to 4 of the disclosure. The transceiver 710 may transmit and receive signals to and from the UE and other network devices. The signal may include a control message, data information, and the like. Meanwhile, the transceiver 710, the at least one controller (processor) 720, and the memory 730 should not be necessarily implemented as separated modules, but may be implemented as one component in the form of a single chip. The controller (processor) 720 may be an application processor (AP), a communication processor (CP), a circuit, an application-specific circuit, or at least one processor. The transceiver 710 may include at least one communication interface configured to wiredly/wirelessly transmit and receive a signal to and from another network entity.

According to an embodiment of the disclosure, the memory 730 may store a basic program for the operation of the corresponding network entity, an application program, and data such as configuration information. The memory 730 provides the stored data according to a request from the controller (processor) 720. The memory 730 may be configured by storage media such as ROM, RAM, hard disc, CD-ROM, and DVD, or a combination of the storage media. The number of memories 730 may be plural. The controller (processor) 720 may perform at least one of the embodiments, based on a program for performing an operation according to at least one of the embodiments of the disclosure stored in the memory 730.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

The embodiments of the disclosure described and shown in the specification and the drawings are merely particular examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived based on the technical idea of various embodiments of the disclosure. Also, the above respective embodiments may be employed in combination, as necessary.

## Claims

1. A first network entity performing a user equipment-policy control function (UE-PCF) in a wireless communication system, the first network entity comprising:
a transceiver; and
at least one processor configured to control the transceiver,
wherein the at least one processor is configured to:
receive, from a second network entity performing the UE-policy control function, a policy control create request message; and
transmit, to the second network entity, a policy control create response message,
wherein, in case that the policy control create request message includes a UE capability related to a policy enforcement report of the UE, the policy control create response message includes a policy control report trigger (PCRT) based on the UE capability, and
wherein, in case that the second network entity receives the policy enforcement report of the UE, the PCRT indicates a notification that the policy enforcement report of the UE has been received.

2. The first network entity of claim 1, wherein the at least one processor is configured to receive, from the second network entity, a policy control update request message, and
wherein, in case that the policy control create response message includes the PCRT and the second network entity receives the policy enforcement report of the UE, the policy control update request message includes at least one of information notifying that the policy enforcement report of the UE has been received or information indicating an enforcement policy of the UE.

3. The first network entity of claim 1, wherein the policy enforcement report of the UE is received by the second network entity through a policy association established between the second network entity and a third network entity performing a session management-policy control function (SM-PCF),
wherein the policy association is established based on the policy enforcement report of the UE, and
wherein the policy association is established based on an identifier of at least one of the first network entity or the second network entity.

4. The first network entity of claim 1, wherein the policy enforcement report of the UE is a report on a policy applied to a session establishment request which is transmitted by the UE to a fourth network entity performing an access management function (AMF).

5. The first network entity of claim 1, wherein the first network entity includes a home public land mobile network (HPLMN), and the second network entity includes a visited public land mobile network (VPLMN).

6. A method of a first network entity performing a user equipment-policy control function (UE-PCF) in a wireless communication system, the first network entity comprising:
receiving, from a second network entity performing the UE-policy control function, a policy control create request message; and
transmitting, to the second network entity, a policy control create response message,
wherein, in case that the policy control create request message includes a UE capability related to a policy enforcement report of the UE, the policy control create response message includes a policy control report trigger (PCRT) based on the UE capability, and
wherein, in case that the second network entity receives the policy enforcement report of the UE, the PCRT indicates a notification that the policy enforcement report of the UE has been received.

7. The method of claim 6, further comprising receiving, from the second network entity, a policy control update request message,
wherein, in case that the policy control create response message includes the PCRT and the second network entity receives the policy enforcement report of the UE, the policy control update request message includes at least one of information notifying that the policy enforcement report of the UE has been received or information indicating an enforcement policy of the UE.

8. The method of claim 6, wherein the policy enforcement report of the UE is received by the second network entity through a policy association established between the second network entity and a third network entity performing a session management-policy control function (SM-PCF),
wherein the policy association is established based on the policy enforcement report of the UE, and
wherein the policy association is established based on an identifier of at least one of the first network entity or the second network entity.

9. The method of claim 6, wherein the policy enforcement report of the UE is a report on a policy applied to a session establishment request which is transmitted by the UE to a fourth network entity performing an access management function (AMF), and
wherein the first network entity is included in a home public land mobile network (HPLMN), and the second network entity is included in a visited public land mobile network (VPLMN).

10. A second network entity performing a user equipment-policy control function (UE-PCF) in a wireless communication system, the second network entity comprising:
a transceiver; and
at least one processor configured to control the transceiver,
wherein the at least one processor is configured to:
transmit, to a first network entity performing the UE-policy control function, a policy control create request message; and
receive, from the first network entity, a policy control create response message,
wherein, in case that the policy control create request message includes a UE capability related to a policy enforcement report of the UE, the policy control create response message includes a policy control report trigger (PCRT) based on the UE capability, and
wherein, in case that the second network entity receives the policy enforcement report of the UE, the PCRT indicates a notification that the policy enforcement report of the UE has been received.

11. The second network entity of claim 10, wherein the at least one processor is configured to transmit, to the first network entity, a policy control update request message, and
wherein, in case that the policy control create response message includes the PCRT and the second network entity receives the policy enforcement report of the UE, the policy control update request message includes at least one of information notifying that the policy enforcement report of the UE has been received or information indicating an enforcement policy of the UE.

12. The second network entity of claim 10, wherein the at least one processor is configured to receive the policy enforcement report of the UE through a policy association established between the second network entity and a third network entity performing a session management-policy control function (SM-PCF),
wherein the policy association is established based on the policy enforcement report of the UE and at least one of an identifier of the first network entity or an identifier of the second network entity,
wherein the policy enforcement report of the UE is a report on a policy applied to a session establishment request which is transmitted by the UE to a fourth network entity performing an access management function (AMF), and
wherein the first network entity is included in a home public land mobile network (HPLMN), and the second network entity is included in a visited public land mobile network (VPLMN).

13. A method of a second network entity performing a user equipment-policy control function (UE-PCF) in a wireless communication system, the method comprising:
transmitting, to a first network entity performing the UE-policy control function, a policy control create request message; and
receiving, from the first network entity, a policy control create response message,
wherein, in case that the policy control create request message includes a UE capability related to a policy enforcement report of the UE, the policy control create response message includes a policy control report trigger (PCRT) based on the UE capability, and
wherein, in case that the policy control create response message includes the PCRT and the second network entity receives the policy enforcement report of the UE, the policy control report trigger (PCRT) indicates a notification that the policy enforcement report of the UE has been received.

14. The method of claim 13, comprising transmitting, to the first network entity, a policy control update request message,
wherein, in case that the policy control create response message includes the PCRT and the second network entity receives the policy enforcement report of the UE, the policy control update request message includes at least one of information notifying that the policy enforcement report of the UE has been received or information indicating an enforcement policy of the UE.

15. The method of claim 13, wherein the policy enforcement report of the UE is received by the second network entity through a policy association established between the second network entity and a third network entity performing a session management-policy control function (SM-PCF),
wherein the policy association is established based on the policy enforcement report of the UE and at least one of an identifier of the first network entity or an identifier of the second network entity,
wherein the policy enforcement report of the UE is a report on a policy applied to a session establishment request which is transmitted by the UE to a fourth network entity performing an access management function (AMF), and
wherein the first network entity is included in a home public land mobile network (HPLMN), and the second network entity is included in a visited public land mobile network (VPLMN).
